# EUROPÄISCHE PATENTANMELDUNG

(11) **EP 1 870 189 A1**
(43) Veröffentlichungstag der Anmeldung: **26.12.2007**
(21) Anmeldenummer: 06011252.1
(22) Anmeldetag: 31.05.2006
(51) Int. Cl.: B23H 9/14, B23H 9/10, B23K 26/38, B23K 26/40, F01D 5/18, B23K 101/00

(54) **Verfahren zur funkenerosiven Bearbeitung eines elektrisch nicht leitenden Materials**

(71) Anmelder: SIEMENS AKTIENGESELLSCHAFT, 80333 München (DE); Albert-Ludwigs-Universität Freiburg, 79085 Freiburg (DE)
(72) Erfinder: Förster, Ralf Dr., 12623 Berlin (DE); Klein, Karsten Dr., 14089 Berlin (DE); Laudien, Ulrich, 10555 Berlin (DE); Settegast, Silke, 10439 Berlin (DE); Subramanian, Ramesh Dr., 10777 Berlin (DE)

(57) **Zusammenfassung**

Verfahren zur funkenerosiven Bearbeitung eines elektrisch nicht leitenden Materials bei dem eine Vorbohrung(3) in dem elektrisch nicht leitenden Material, beispielsweise mit einem Laser, erstellt wird, in die Vorbohrung (3) eine elektrisch leitende Substanz (4) eingebracht und als eine Assistenzelektrode geschaltet wird, und durch funkenerosive Bearbeitung mittels einer Arbeitselektrode (6) eine Endbohrung (8) entlang der Vorbohrung (3) hergestellt wird, wobei der Durchmesser der Endbohrung (8) zumindest bereichsweise größer als der Durchmesser der Vorbohrung (3) ist.

## Beschreibung

Die Erfindung betrifft ein Verfahren zur funkenerosiven Bearbeitung eines elektrisch nicht leitenden Materials.

Funkenerosive Bearbeitungsverfahren für elektrisch nicht leitende Materialien sind im Stand der Technik bekannt. Sie werden u. a. eingesetzt, um in Bauteilen, die mit einer keramischen Beschichtung versehen sind, Bohrungen zu erstellen. So werden etwa bei Turbinenschaufeln, die eine keramische Wärmedämmschicht auf einem metallischen Grundkörper aufweisen, Kühlluftbohrungen durch Funkenerosion erstellt.

In der DE 41 02 250 A1 ist allgemein ein Verfahren zur funkenerosiven Bearbeitung elektrisch nicht leitender Materialien beschrieben. Bei diesem Verfahren wird das nicht leitende Material vor seiner Bearbeitung mit einer elektrisch leitenden Substanz beschichtet. Diese Schicht wird als Assistenzelektrode verwendet, die bei der funkenerosiven Bearbeitung eine elektrische Kontaktierung zu einer Arbeitselektrode herstellt. Das mit der Assistenzelektrode beschichtete, elektrisch nicht leitende Material und zumindest der zur Assistenzelektrode weisende Endbereich der Arbeitselektrode, an dem es bei der Bearbeitung zur Funkenentladung kommt, sind in ein Dielektrikum getaucht, das durch eine Flüssigkeit wie Kerosin oder auch ein Gas gebildet wird.

Wenn an die Anordnung eine Spannung angelegt wird, kommt es zwischen der Arbeitselektrode und der Assistenzelektrode zu einer Funkenentladung und in der Folge zu einem Abtrag der Assistenzelektrode sowie des darunterliegenden elektrisch nicht leitenden Materials. Gleichzeitig wird ein Teil des Dielektrikums gecrackt, wodurch Kohlenstoff oder leitfähige Carbide entstehen, die in Form einer elektrisch leitfähigen Schicht auf den freigelegten Oberflächenbereichen des nicht leitenden Materials abgeschieden werden. Die so abgeschiedene, elektrisch leitende Schicht ersetzt somit das abgetragene Material der Assistenzelektrode und stellt bei einem Vordringen der Arbeitselektrode in das nicht leitende Material eine elektrische Verbindung zu der Oberfläche des nicht leitenden Materials her, so dass eine kontinuierliche Bearbeitung möglich ist.

Als nachteilig wird angesehen, dass bei dem bekannten Verfahren die Bearbeitungsgeschwindigkeit begrenzt ist, da der Abscheidungsprozess der leitenden Schicht langsam erfolgt. Eine zügige Bearbeitung ist deshalb nicht möglich. Außerdem kann es auf Grund der im µm-Bereich liegenden geringen Dicke der neu gebildeten Schicht leicht zu Unterbrechungen der Leitungen kommen, wenn diese beschädigt wird, was den Prozess vollständig zum Erliegen bringt.

Aufgabe der vorliegenden Erfindung ist es, ein Verfahren bereitzustellen, das eine schnelle und zuverlässige funkenerosive Bearbeitung eines elektrisch nicht leitenden Materials ermöglicht.

Diese Aufgabe wird erfindungsgemäß dadurch gelöst, dass eine Vorbohrung in dem elektrisch nicht leitenden Material, beispielsweise mit einem Laser, erstellt wird, in die Vorbohrung eine elektrisch leitende Substanz eingebracht und als Assistenzelektrode geschaltet wird, und durch funkenerosive Bearbeitung mittels einer Arbeitselektrode eine Endbohrung entlang der Vorbohrung hergestellt wird, wobei der Durchmesser der Endbohrung zumindest bereichsweise größer als der Durchmesser der Vorbohrung ist.

Der Erfindung liegt damit die Überlegung zugrunde, die Assistenzelektrode nicht als flächige Beschichtung auf der zu bearbeitenden Oberfläche vorzusehen, sondern innerhalb einer Vorbohrung bereitzustellen. Auf diese Weise wird eine sichere elektrische Kontaktierung zwischen der Arbeitselektrode und der Assistenzelektrode während des gesamten Bearbeitungsvorgangs ermöglicht, wodurch eine Abscheidung von elektrisch leitendem Material aus dem Dielektrikum auf dem nicht leitenden Material zumindest im Wesentlichen überflüssig wird. Damit kann die funkenerosive Bearbeitung vergleichsweise erfolgen.

Als elektrisch leitende Substanzen für die Assistenzelektrode können u. a. Graphit oder organische Verbindungen wie Polymere verwendet werden. Diese Substanzen sind leicht zu verarbeiten und in die entsprechende Form zu bringen. Außerdem verbrennen sie bei der funkenerosiven Bearbeitung, ohne dass ein Rückstand auf dem Bauteil zurückbleibt.

Ebenso können Metalle als elektrisch leitende Substanz verwendet werden. Diese weisen eine hohe elektrische Leitfähigkeit auf.

Die Vorbohrung muss nicht vollständig mit der elektrisch leitenden Substanz gefüllt werden. Es besteht auch die Möglichkeit, die Substanz in Form einer Beschichtung auf die Innenwand der Vorbohrung aufzubringen. Ebenfalls ist es möglich, die Substanz in Form eines Drahtes oder Stiftes in die Vorbohrung einzubringen. Vorteilhaft ist, dass in allen Fällen nur eine geringe Menge an leitender Substanz benötigt wird, die später bei der funkenerosiven Bearbeitung mit abgetragen werden muss.

Grundsätzlich ist es auch möglich, elektrisch leitende Flüssigkeiten als Assistenzelektrode zu verwenden, wenn eine unkontrollierte Durchmischung mit dem Dielektrikum verhindert wird. Auf diese Weise kann die Vorbohrung schnell und kostengünstig mit einer elektrisch leitenden Substanz versehen werden.

Versuche haben gezeigt, dass das erfindungsgemäße Verfahren besonders gut für die Verarbeitung von Keramikmaterialien geeignet ist. Es erfolgt ein zügiger Abtrag des keramischen Materials, der mit anderen, im Stand der Technik bekannten Verfahren so nicht möglich ist. Dies trifft im besonderen Maße auf Keramiken aus voll- oder teilstabilisiertem Zirkonium zu, die in vielen Fällen als Beschichtung für Bauteile verwendet werden. Sie erfüllen in diesem Fall die Funktion einer Wärmedämmschicht und können mit Hilfe des erfindungsgemäßen Verfahrens schnell und präzise funkenerosiv bearbeitet werden.

Vor allem beschichtete Bauteile einer Turbine können funkenerosiv bearbeitet werden, wobei es möglich ist, in Lauf- und Leitschaufeln Kühlluftbohrungen einzubringen und dabei den Diffusoranteil der Bohrung durch ein geeignetes Führen der Arbeitselektrode auszubilden.

Das erfindungsgemäße Verfahren wird im Folgenden anhand von zwei Zeichnungen näher erläutert. Es zeigen:
- Figur 1: eine Anordnung für die Durchführung des Verfahrens zur funkenerosiven Bearbeitung von elektrisch nicht leitenden Materialien gemäß der vorliegenden Erfindung in schematischer Darstellung vor dem Beginn der Bearbeitung,
- Figur 2: die Anordnung aus Figur 1 während der Bearbeitung,
- Figur 3: eine Gasturbine,
- Figur 4: eine Turbinenschaufel und
- Figur 5: eine Brennkammer.

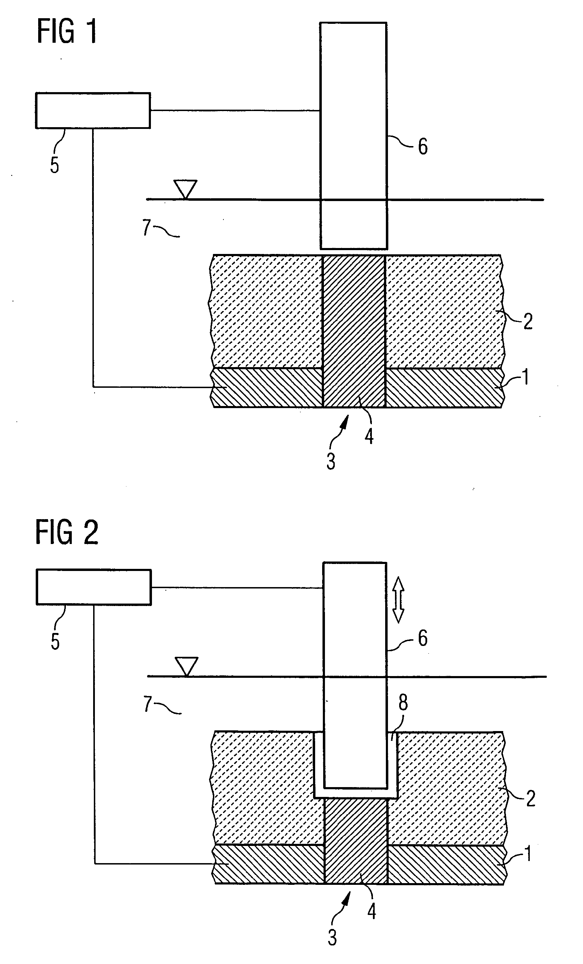

Die Figur 1 zeigt eine Anordnung für die Durchführung des erfindungsgemäßen Verfahrens zur funkenerosiven Bearbeitung von elektrisch nicht leitenden Materialien. In der dargestellten Ausführungsform soll ein Bauteil bearbeitet werden, das einen metallischen Grundkörper 1 und eine darauf vorgesehene Beschichtung 2 aufweist. Die Beschichtung 2 ist als eine Wärmedämmschicht ausgebildet und besteht aus einem keramischen Material wie vollstabilisiertem Zirkoniumoxid. Das Bauteil kann beispielsweise ein Bauteil einer Turbine oder Brennkammer und insbesondere eine Turbinenschaufel sein.

Eine Vorbohrung 3 durchsetzt den Grundkörper 1 und die Beschichtung 2 und ist mit einer elektrisch leitenden Substanz in der Form eines Metalldrahts 4 gefüllt. Der Metalldraht 4 ist über den metallischen Grundkörper 1 elektrisch mit einem Generator 5 verbunden und wirkt als eine Assistenzelektrode.

Weiterhin umfasst die Anordnung eine Arbeitselektrode 6, die ebenfalls an den Generator 5 angeschlossen ist. Die Arbeitselektrode 5 und das zu bearbeitende Bauteil sind in ein Dielektrikum 7 getaucht.

Um die Beschichtung 2 des Bauteils funkenerosiv zu bearbeiten, wird in einem ersten Schritt die Vorbohrung 3 in der Beschichtung 2 und in dem Grundkörper 1, beispielsweise mit einem Laser hergestellt. Die Vorbohrung 3 kann das elektrisch nicht leitende Material wie in den Zeichnungen vollständig durchsetzen oder als Sackbohrung ausgeführt sein.

In die Vorbohrung 3 wird der Metalldraht 4 eingebracht, der sich im elektrisch leitenden Kontakt mit dem Grundkörper 1 befindet. Der Metalldraht 4 wird als Assistenzelektrode geschaltet, indem der Generator 5 mit dem Grundkörper 1 verbunden wird. Ebenfalls mit dem Generator 5 wird die Arbeitselektrode 6 verbunden, die für die Abtragung verwendet wird. Anschließend wird das Bauteil in das Dielektrikum getaucht und eine Spannung an die beiden Elektroden 4, 6 angelegt.

Die Arbeitselektrode 6 wird zur funkenerosiven Bearbeitung wie durch einen Pfeil angedeutet in Richtung der Vorbohrung 3 bewegt, so dass es zu einer elektrischen Kontaktierung in Form von Funkenschlag zwischen der Arbeitselektrode 6 und dem Metalldraht 4 kommt, wobei während des Funkenschlages die Beschichtung 2 und der Metalldraht 4 verdampft und somit abgetragen werden und in der Folge die Endbohrung 8 ausgebildet wird.

Es ist möglich, die Arbeitselektrode 6 frei gesteuert zu bewegen und auf diese Weise Endbohrungen 8 mit unterschiedlichen Geometrien zu erzeugen, solange eine ausreichende Kontaktierung zu dem Metalldraht 4 gewährleistet bleibt. Zumindest bereichsweise weist die Endbohrung 8 einen größeren Durchmesser als die Vorbohrung 3 auf.

Wenn die funkenerosive Bearbeitung nicht über die gesamte Erstreckung der Vorbohrung 3 ausgeführt wird, kann es nötig sein nach der funkenerosiven Bearbeitung die verbleibende elektrisch leitende Substanz aus der Vorbohrung 3 zu entfernen. Dies ist in Abhängigkeit von der Art der elektrisch leitenden Substanz auf verschiedene Weise möglich. Wenn es sich beispielsweise um Graphit oder eine organische Substanz handelt, kann die Substanz durch Ausbrennen entfernt werden. Einige Metalle, die einen niedrigen Schmelzpunkt bzw. Siedepunkt haben, können ebenfalls durch Hitzebehandlung entfernt werden. Alternativ dazu können mechanische Verfahren, wie der Einsatz von Druckluft, abrasiven Flüssigkeitsstrahlen oder das Laserbohren verwendet werden.

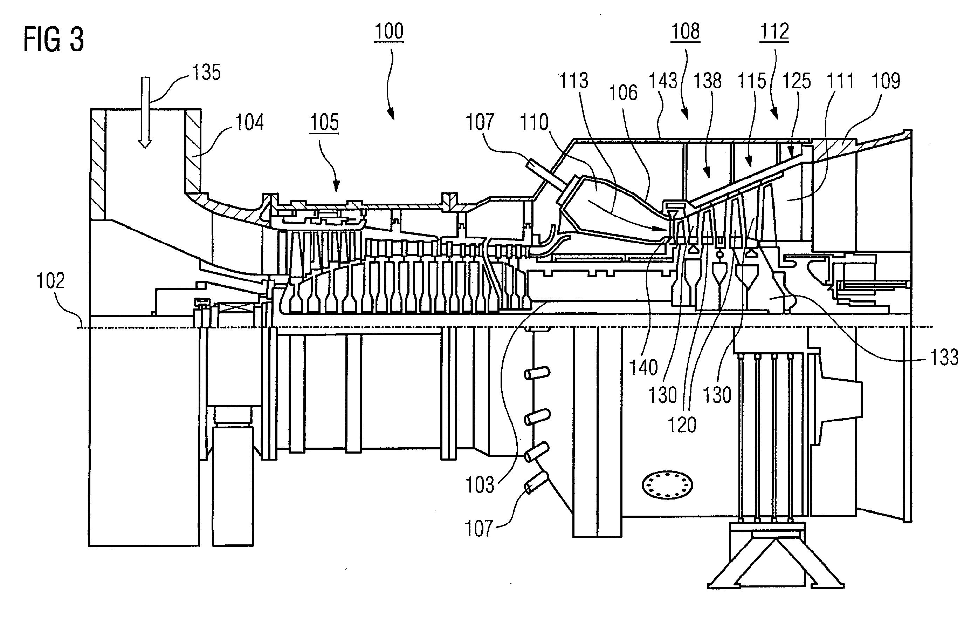

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

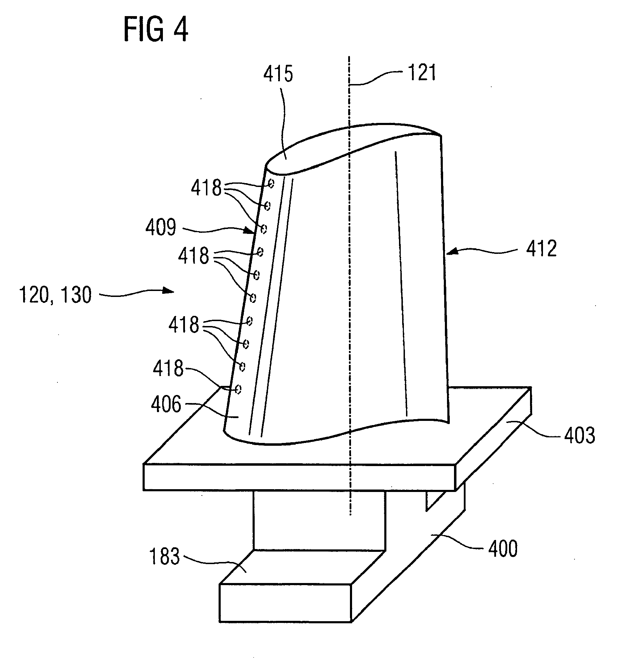

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h, Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammerisetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

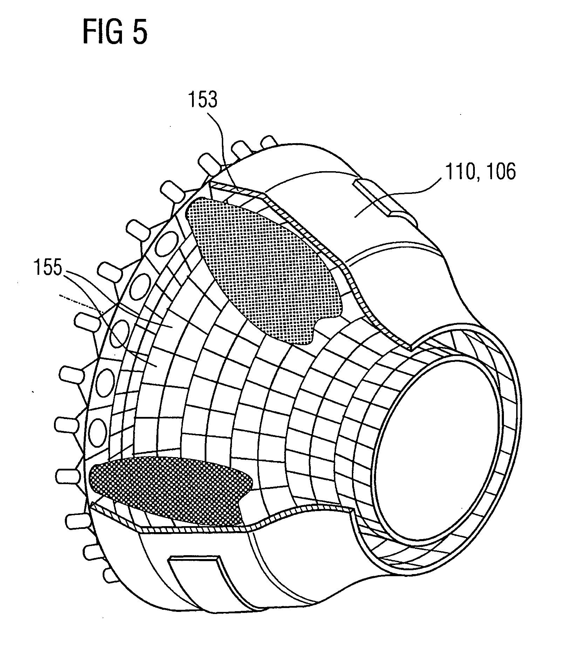

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur funkenerosiven Bearbeitung eines elektrisch nicht leitenden Materials,
**dadurch gekennzeichnet, dass**
eine Vorbohrung(3) in dem elektrisch nicht leitenden Material, beispielsweise mit einem Laser, erstellt wird,
in die Vorbohrung (3) eine elektrisch leitende Substanz (4) eingebracht und als eine Assistenzelektrode geschaltet wird,
und durch funkenerosive Bearbeitung mittels einer Arbeitselektrode (6) eine Endbohrung (8) entlang der Vorbohrung (3) hergestellt wird,
wobei der Durchmesser der Endbohrung (8) zumindest bereichsweise größer als der Durchmesser der Vorbohrung (3) ist.

2. Verfahren nach Anspruch 1,
**dadurch gekennzeichnet, dass**
die elektrisch leitende Substanz (4) Graphit oder eine organische Verbindung ist.

3. Verfahren nach Anspruch 1,
**dadurch gekennzeichnet, dass**
die elektrisch leitende Substanz (4) ein Metall ist.

4. Verfahren nach einem der Ansprüche 1 bis 3,
**dadurch gekennzeichnet, dass**
die Innenwand der Vorbohrung (3) mit der elektrisch leitenden Substanz (4) beschichtet wird.

5. Verfahren nach einem der Ansprüche 1 bis 3,
**dadurch gekennzeichnet, dass**
die elektrisch leitende Substanz (4) in Form eines Drahtes oder eines Stiftes in die Vorbohrung (3) eingebracht wird.

6. Verfahren nach Anspruch 1,
**dadurch gekennzeichnet, dass**
die elektrisch leitende Substanz (4) eine Flüssigkeit ist.

7. Verfahren nach einem der Ansprüche 1 bis 6,
**dadurch gekennzeichnet, dass**
das elektrisch nicht leitende Material eine Keramik ist.

8. Verfahren nach Anspruch 7,
**dadurch gekennzeichnet, dass**
die Keramik voll- oder teilstabilisiertes Zirkoniumoxid enthält oder daraus besteht.

9. Verfahren nach einem der Ansprüche 1 bis 8,
**dadurch gekennzeichnet, dass**
das elektrisch nicht leitende Material eine Beschichtung (2) auf einem Bauteil ist.

10. Verfahren nach Anspruch 9,
**dadurch gekennzeichnet, dass**
die Beschichtung (2) eine Wärmedämmschicht ist.

11. Verfahren nach einem der Ansprüche 9 oder 10,
**dadurch gekennzeichnet, dass**
das Bauteil ein Teil einer Turbine ist.

12. Verfahren nach Anspruch 11,
**dadurch gekennzeichnet, dass**
das Bauteil eine Lauf- oder eine Leitschaufel ist.
